# EUROPEAN PATENT SPECIFICATION

(11) **EP 3 990 251 B1**
(45) Date of publication and mention of the grant of the patent: **06.11.2024**
(21) Application number: 20743812.8
(22) Date of filing: 23.06.2020
(51) Int. Cl.: B29C 49/46, B29C 49/58, B67C 3/20, B29C 49/48, B29C 49/56

(54) **DAMPENING IN FORMING AND FILLING A CONTAINER**
DÄMPFUNG BEIM FORMEN UND FÜLLEN EINES BEHÄLTERS
AMORTISSEMENT LORS DE LA FORMATION ET DU REMPLISSAGE D'UN RÉCIPIENT

(30) Priority: 27.06.2019 US 201962867574 P
(43) Date of publication of application: 04.05.2022
(73) Proprietor: Discma AG, 6331 Hünenberg (CH)
(72) Inventor: SIERADZKI, Richard, Frankfort, Illinois 60423 (US); SEIDL, Edward, Lathrup Village, Michigan 48076 (US)
(74) Representative: Noble, Frederick
(86) International application number: PCT/IB2020/055924
(87) International publication number: WO 2020/261115

(56) References cited:
- EP-A1- 3 374 148
- DE-A1- 102014 019 400
- DE-A1- 102015 016 124
- DE-A1- 102015 016 125
- US-A1- 2012 315 348
- US-A1- 2016 082 644

## Description

### FIELD OF THE INVENTION

The present technology relates to simultaneously forming and filling a container using liquid, including use of fluid dampening to improve system performance and durability in providing a filled container.

### INTRODUCTION

This section provides background information related to the present disclosure which is not necessarily prior art.

Various products are distributed in plastic containers, such as containers formed from one or more polymers. Common polymers used to form containers include polyesters, such as polyethylene terephthalate (PET), high and low density polyethylenes, polycarbonate, and polypropylene, among others. Plastic containers can be made using various blow molding processes including injection blow molding and extrusion blow molding.

Injection blow molding can be used to form certain plastic containers in one or more stages and can involve use of a stretch rod. In a two-stage injection stretch blow molding process, the plastic is first molded into a preform using an injection molding process. The preform includes the neck and finish of the container to be formed, which can include threading thereon, and a closed distal end. The preform can then be heated above the plastic glass transition temperature, longitudinally stretched with a stretch rod, and blown using high-pressure gas (e.g., air) into a container conforming to a mold. As the preform is inflated, it elongates and stretches, taking on the shape of the mold cavity. The plastic solidifies upon contacting the cooler surface of the mold and the finished hollow container is subsequently ejected from the mold. The injection stretch blow molding process can be used to form plastic containers for packaging consumer beverages, as well as other liquids and materials. However, the process has some inherent limitations, which include undesirable gate wells or discontinuities on the bottom portions of containers as well as limitations on the possible spectrum of designs that can be realized using the stretch blow molding process, such as containers incorporating a handle or void space therein.

Extrusion blow molding can be used to form certain plastic containers where a continuously extruded hot plastic tube or parison is captured within a mold and inflated against the inner surfaces of the mold to form a container blank. The mold can be designed to travel at the speed at which the extruded parison is moving when it closes on the parison so that the process can operate on a continuous basis. There are several different types of extrusion blow molding machines, including shuttle molds that are designed to travel in a linear motion and extrusion blow molding wheels that travel in a rotary or circular motion. While extrusion blow molding processes have addressed a need for an improved plastic container that obviates some of the disadvantages inherent to containers fabricated using the stretch blow molding process, the extrusion blow molding processing requires a number of steps to form the container then later fill and cap the container. As a result, significant costs can be incurred while separately performing the container forming and filling processes, including transport and time commitments.

Blow molding containers and subsequent filling of containers have consequently developed as two independent processes, in many cases operated at different facilities. In order to make container filling more cost effective, some filling facilities have installed blow molding equipment on site, in many cases integrating blow molders directly into filling lines. Equipment manufacturers have recognized this advantage and are selling "integrated" systems that are designed to insure that the blow molder and the filler are fully synchronized. Despite the efforts in bringing the two processes together, blow molding and filling continue to be two independent, distinct processes. As a result, significant costs may be incurred in separately performing these two processes. Forming and filling containers can also involve the rapid transport of the filling liquid to various points within a system, either where the liquid is immediately halted and held at a certain location or stage and/or where movement of the liquid changes directions abruptly (e.g., a 90° turn). Such actions can involve the rapid acceleration, rapid deceleration, and/or redirection of the filling liquid that can impart what is termed "water hammer" or "fluid hammer" on the system, essentially being a hydraulic shock resulting from a change in fluid momentum. For example, opening/closing of valves with respect to a high pressure liquid, liquid movement across distances, and directional changes can impose noise, vibration, and stress on the system components that can accelerate component fatigue, even leading to component failure.

Thus, there is a need for a liquid or hydraulic blow molding system suitable for forming and filling a container in a single operation to optimize the packaging of a liquid product by minimizing transport and time demands, by providing a forming and filling process that minimizes noise, vibration, and stress on the system, and that can improve durability and performance of the system.

EP 3374148 A1 discloses a method and an apparatus for producing containers from preforms by introducing liquid filling material into the preform under pressure, wherein the filling liquid is pressurized by a pressure pump and introduced into the preform through a filling valve at a forming and filling station. A damping element is provided so that when there is a sudden increase in pressure at the end of a molding and filling process, the pressure wave can be absorbed or dampened.

DE 102015016124 A1 discloses a method and a device for producing containers filled with a liquid filling material from preforms by introducing filling material into the preform under pressure, wherein the filling material is pressurized by a pressure pump and is introduced into the preform at a forming and filling station through a filling valve. The invention allows both the desired filling pressure and the desired volume flow of the filling material to be reliably available during the entire molding and filling phase. A dampening element is provided which can dampen the pressure wave by briefly absorbing a small volume of filling material.

DE 102015016125 A1 discloses a device for producing containers filled with a liquid filling material from preforms by introducing filling material into the preform under pressure. The invention allows pressure peaks occurring during the filling process to be dampened by a damping element.

DE 102014019400 A1 discloses a method and a device for producing containers filled with a liquid filling material from preforms. The invention allows the production of containers to be carried out predominantly with reduced pressure.

US 2012/315348 A1 figure 9 discloses a system in accordance with the preamble of claim 1.

### SUMMARY OF THE INVENTION

The present technology includes articles of manufacture, systems, and processes that relate to use of one or more fluid dampeners placed at certain locations to absorb hydraulic shock arising from simultaneously forming and filling a container, in particular the dampening of pressure surges or waves related to halting or changing direction of a filling liquid during a forming and filling process.

The present invention is defined by the features of the independent claims.

Systems for simultaneously forming and filling a container include a mold, a pressure source, a blow nozzle, and a first dampening means. The mold has a cavity defining an internal surface and is configured to accept a preform. The pressure source is configured to provide a pressurized liquid. The pressure source can have an inlet, a chamber, an outlet, and a mechanically driven piston-like device moveable within the chamber in a first direction to draw a liquid into the chamber through the inlet and moveable in a second direction to urge the liquid out of the chamber through the outlet as the pressurized liquid. The pressure source can also include a reservoir containing liquid under pressure as the pressurized liquid, where the pressurized liquid can move via valving toward an area of low pressure. The blow nozzle is configured to receive the pressurized liquid from the pressure source and transfer the pressurized liquid into the preform to urge the preform to expand toward the internal surface of the mold cavity and form a resultant container, where the liquid remains within the container as an end product. The first dampening means is coupled to the mold.

Aspects of such systems can further include where the piston-like device is one of a piston, a pump, and an accumulator. The system can further include a stretch rod configured to mechanically stretch the preform within the mold cavity prior to the pressurized liquid being transferred into the preform by the blow nozzle, where the stretch rod can be vented. The first dampening means can include a weight-loaded piston dampener, a spring dampener, or a hydraulic or pneumatic piston dampener. Where the dampening means includes a pneumatic piston dampener, it can comprise a piston having a contact surface coupled to the one of the blow nozzle and the mold, including a movable portion of the mold, the piston sealing a volume of gas, the piston configured to move and compress the volume of gas when a force is applied to the contact surface. The volume of gas can be pressurized above atmospheric pressure. The contact surface can be coupled to the blow nozzle opposite from where the blow nozzle receives the pressurized liquid from the pressure source. The contact surface can also be coupled to the mold remote from where the mold accepts the preform. Where the first dampening means is coupled to one of the blow nozzle and the mold, the system can further include a second dampening means coupled to the other one of the blow nozzle and the mold. The first dampening means and the second dampening means can each comprise a pneumatic piston dampener including a piston having a contact surface coupled to the respective one of the blow nozzle and the mold, the piston sealing a volume of gas or liquid, the piston configured to move and compress the volume of gas or liquid when a force is applied to the contact surface.

In certain embodiments, the system can be configured with a first dampening means and a second dampening means. The second dampening means can comprise a second pneumatic piston dampener including a second piston having a second contact surface coupled to the blow nozzle opposite from where the blow nozzle receives the pressurized liquid from the pressure source. The second piston seals a first volume of gas, where the second piston is configured to move and compress the first volume of gas when a second force is applied to the second contact surface. The first dampening means can comprise a first pneumatic piston dampener including a first piston having a first contact surface coupled to the mold opposite from where the mold accepts the preform. The first piston seals a first volume of gas, where the first piston is configured to move and compress the first volume of gas when a first force is applied to the first contact surface.

Methods of simultaneously forming and filling a container include applying a pressure to a liquid using a pressure source to provide a pressurized liquid. The pressure source has an inlet, a chamber, an outlet, and a mechanically driven piston-like device moveable within the chamber in a first direction to draw the liquid into the chamber through the inlet and moveable in a second direction to urge the liquid out of the chamber through the outlet as the pressurized liquid. The pressure source can also include a reservoir containing liquid under pressure as the pressurized liquid, where the pressurized liquid can move via valving toward an area of low pressure. The pressurized liquid is dispensed from the pressure source to a blow nozzle, where the blow nozzle is configured to transfer the pressurized liquid into a preform within a mold. The mold has a cavity defining an internal surface and is configured to accept the preform. The preform is expanded toward the internal surface of the mold cavity using the pressurized liquid to form a resultant container, where the liquid remains within the container as an end product. A first force is dampened using a first dampening means, where the first force results from one of: dispensing the pressurized liquid from the pressure source to the blow nozzle, or transferring the pressurized liquid into the preform within the mold.

Aspects of such methods can further include where prior to dispensing the pressurized liquid from the pressure source to the blow nozzle, a stretch rod is used to mechanically stretch the preform within the mold cavity. Expanding the preform toward the internal surface of the mold cavity using the pressurized liquid to form the resultant container can also include venting the preform through the stretch rod. Wherein the first dampening means includes a pneumatic piston dampener, the pneumatic piston dampener can include a piston having a contact surface, the piston sealing a volume of gas, the piston configured to move and compress the volume of gas when a first force is applied to the contact surface, where the first force results from the one of: dispensing the pressurized liquid from the pressure source to the blow nozzle, and transferring the pressurized liquid into the preform within the mold. The contact surface of the piston can be coupled to the blow nozzle remote from where the blow nozzle receives the pressurized liquid from the pressure source when the first force results from dispensing the pressurized liquid from the pressure source to the blow nozzle. Alternatively, the contact surface of the piston can be coupled to the mold opposite from where the mold accepts the preform when the first force results from transferring the pressurized liquid into the preform within the mold.

In certain embodiments, where the first force results from one of dispensing the pressurized liquid from the pressure source to the blow nozzle, and transferring the pressurized liquid into the preform within the mold, the method can include dampening a second force using a second dampening means, where the second force results from the other one of dispensing the pressurized liquid from the pressure source to the blow nozzle, and transferring the pressurized liquid into the preform within the mold. For example, the first dampening means can comprise a first pneumatic piston dampener including a first piston having a first contact surface coupled to the blow nozzle opposite from where the blow nozzle receives the pressurized liquid from the pressure source. The first piston seals a first volume of gas, where the first piston is configured to move and compress the first volume of gas when the first force is applied to the first contact surface. The first force can result from dispensing the pressurized liquid from the pressure source to the blow nozzle. The second dampening means can comprise a second pneumatic piston dampener including a second piston having a second contact surface coupled to the mold opposite from where the mold accepts the preform. The second piston seals a second volume of gas, where the second piston is configured to move and compress the second volume of gas when the second force is applied to the second contact surface. The second force can result from transferring the pressurized liquid into the preform within the mold.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure.
Figure 1 is a schematic depiction of a system for simultaneously forming and filling a container in accordance with the present technology, where a heated preform is passed into a mold and a pressure source including a piston-like device begins to move upward, drawing a filling liquid into the pressure source.
Figure 2 is a schematic depiction of the system illustrated in Figure 1, where two mold halves close around the preform and the filling liquid continues to accumulate in the pressure source.
Figure 3 is a schematic depiction of the system illustrated in Figure 2, where a stretch rod extends into the preform to initiate mechanical stretching thereof and where the filling liquid continues to accumulate in the pressure source.
Figure 4 is a schematic depiction of the system of Figure 3, where the stretch rod has fully stretched the preform and where a charge of the filling liquid has fully accumulated in the pressure source.
Figure 5 is a schematic depiction of the system of Figure 4, where downward movement of the piston-like device of the pressure source transfers the charge of the filling liquid to a blow nozzle, the blow nozzle redirects the charge of filling liquid into the stretched preform, and a first dampener is configured to dampen a force resulting from redirection of the charge of filling liquid.
Figure 6 is a schematic depiction of the system of Figure 5, where the charge of filling liquid has formed the preform into a container conforming to an interior surface of the mold and where the stretch rod is being withdrawn therefrom.
Figure 7 is a schematic depiction of the system of Figure 8, where the mold halves separate to release the resultant container filled with the charge of the filling liquid.

### DETAILED DESCRIPTION OF THE INVENTION

The following description of technology is merely exemplary in nature of the subject matter, manufacture and use of one or more inventions, and is not intended to limit the scope, application, or uses of any specific invention claimed in this application or in such other applications as can be filed claiming priority to this application, or patents issuing therefrom. Regarding methods disclosed, the order of the steps presented is exemplary in nature, and thus, the order of the steps can be different in various embodiments. "A" and "an" as used herein indicate "at least one" of the item is present; a plurality of such items can be present, when possible. Except where otherwise expressly indicated, all numerical quantities in this description are to be understood as modified by the word "about" and all geometric and spatial descriptors are to be understood as modified by the word "substantially" in describing the broadest scope of the technology. "About" when applied to numerical values indicates that the calculation or the measurement allows some slight imprecision in the value (with some approach to exactness in the value; approximately or reasonably close to the value; nearly). If, for some reason, the imprecision provided by "about" and/or "substantially" is not otherwise understood in the art with this ordinary meaning, then "about" and/or "substantially" as used herein indicates at least variations that can arise from ordinary methods of measuring or using such parameters.

Although the open-ended term "comprising," as a synonym of non-restrictive terms such as including, containing, or having, is used herein to describe and claim embodiments of the present technology, embodiments can alternatively be described using more limiting terms such as "consisting of" or "consisting essentially of." Thus, for any given embodiment reciting materials, components, or process steps, the present technology also specifically includes embodiments consisting of, or consisting essentially of, such materials, components, or process steps excluding additional materials, components or processes (for consisting of) and excluding additional materials, components or processes affecting the significant properties of the embodiment (for consisting essentially of), even though such additional materials, components or processes are not explicitly recited in this application. For example, recitation of a composition or process reciting elements A, B and C specifically envisions embodiments consisting of, and consisting essentially of, A, B and C, excluding an element D that can be recited in the art, even though element D is not explicitly described as being excluded herein.

As referred to herein, all compositional percentages are by weight of the total composition, unless otherwise specified. Disclosures of ranges are, unless specified otherwise, inclusive of endpoints and include all distinct values and further divided ranges within the entire range. Thus, for example, a range of "from A to B" or "from about A to about B" is inclusive of A and of B. Disclosure of values and ranges of values for specific parameters (such as amounts, weight percentages, etc.) are not exclusive of other values and ranges of values useful herein. It is envisioned that two or more specific exemplified values for a given parameter can define endpoints for a range of values that can be claimed for the parameter. For example, if Parameter X is exemplified herein to have value A and also exemplified to have value Z, it is envisioned that Parameter X can have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if Parameter X is exemplified herein to have values in the range of 1-10, or 2-9, or 3-8, it is also envisioned that Parameter X can have other ranges of values including 1-9, 1-8, 1-3, 1-2, 2-10, 2-8, 2-3, 3-10, 3-9, and so on.

When an element or layer is referred to as being "on," "engaged to," "connected to," or "coupled to" another element or layer, it can be directly on, engaged, connected or coupled to the other element or layer, or intervening elements or layers can be present. In contrast, when an element is referred to as being "directly on," "directly engaged to," "directly connected to" or "directly coupled to" another element or layer, there can be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. can be used herein to describe various elements, components, regions, layers and/or sections, these elements, components, regions, layers and/or sections should not be limited by these terms. These terms can be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, can be used herein for ease of description to describe one element or feature's relationship to another element(s) or feature(s) as illustrated in the figures. Spatially relative terms can be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device can be otherwise oriented (rotated 90 degrees or at other orientations) and the spatially relative descriptors used herein interpreted accordingly.

The present technology allows for simultaneously forming and filling a container where movement of a filling liquid is dampened at one or more points to minimize noise, vibration, and stress on system components and maximize component lifespan. Apparatus, systems, and methods defined herein make use of a mold having a cavity defining an internal surface with the cavity configured to accept a preform. A pressure source is configured to provide a pressurized liquid, where the pressure source has an inlet, a chamber, an outlet, and a mechanically driven piston-like device moveable within the chamber in a first direction to draw a liquid into the chamber through the inlet and moveable in a second direction to urge the liquid out of the chamber through the outlet as the pressurized liquid. A blow nozzle is configured to receive the pressurized liquid from the pressure source and transfer the pressurized liquid into the preform to urge the preform to expand toward the internal surface of the mold cavity and form a resultant container, where the liquid remains within the container as an end product. One or more dampening means are coupled to various portions of the system, such as the blow nozzle and/or the mold, to dampen forces resulting from accelerating/decelerating the liquid and/or changing direction in transferring the liquid, such as when the pressurized liquid is dispensed from the pressure source to the blow nozzle and/or from when the pressurized liquid is dispensed into the preform within the mold. For example, such dampening means can be coupled to the blow nozzle opposite from where the blow nozzle receives the pressurized liquid from the pressure source and/or coupled to the mold opposite from where the mold accepts the preform. In this way, it is possible to minimize hydraulic shock resulting from one or more changes in fluid momentum at various points during operation of the systems and implementation of the methods described herein.

Dampening can be realized using various types of dampeners, including hydraulic dampeners. Dampener placement can be designed to reduce water hammer, which is a shock wave passing down a conduit as a result of a sudden liquid flow rate change therein. Water hammer can result from rapid closing of valve(s), a pump tripping or starting up suddenly, and/or rapid liquid acceleration by a pressure source. The shock wave can travel along the conduit and change fluid velocity as it travels. If the shock wave is sharp and changes direction (e.g., passes through conduit bends), the pressure step change can cause out-of-balance forces which can move the conduit. It is possible for conduit to shake, rattle, move off its supports, and/or transmit the force to its anchors or supports. The pressure wave can travel through other components, including pumps where the shock wave can damage the impeller and drive.

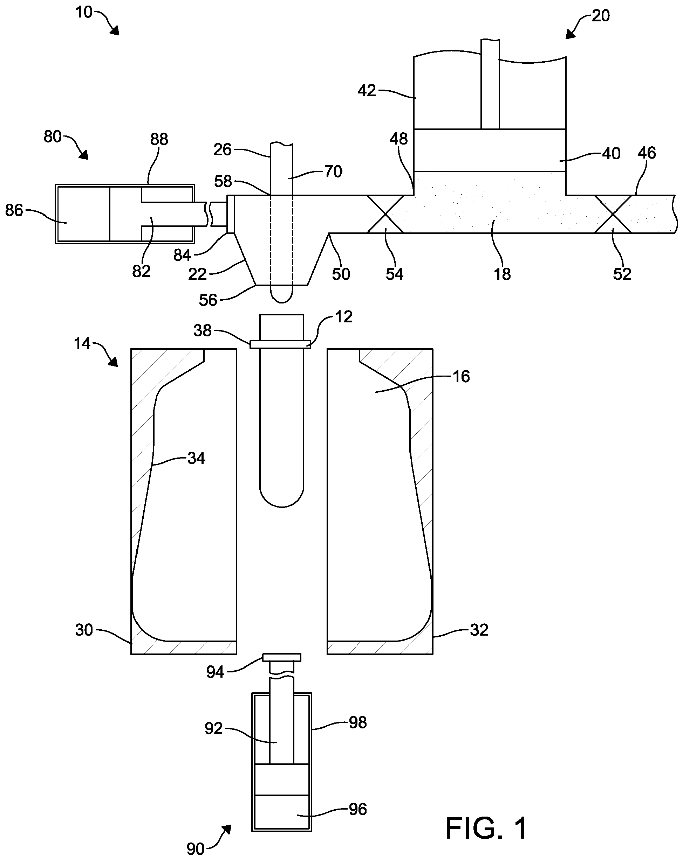

With reference to the several figures, a system according to the present technology is shown and generally referred to as reference numeral 10. FIGS. 1-7 show an example sequence for simultaneously forming and filling a container using the system 10 in accordance with the present technology. As will be appreciated from the following description, the system 10 and associated method utilize a filling liquid 18 to impart the pressure required to expand a preform 12 to take on the shape of a mold cavity 16, thus simultaneously forming and filling a resultant container C with the filling liquid 18.

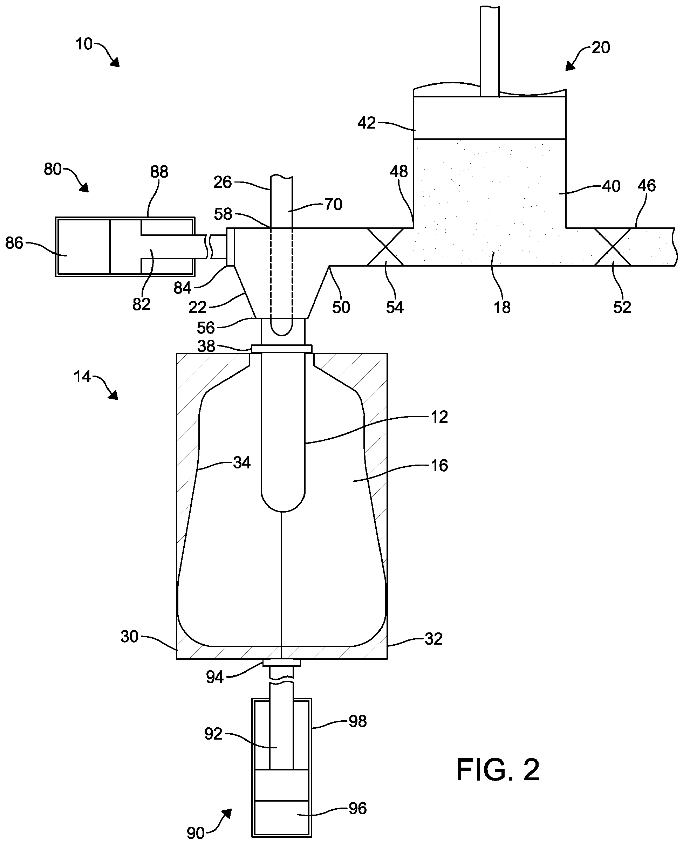

With initial reference to FIGS. 1-2, the system 10 will be described in greater detail. The system 10 generally includes a mold 14 having a mold cavity 16, a pressure source 20, a first dampener 90, a second dampener 80, a blow nozzle 22, and a stretch rod 26. The exemplary mold cavity 16 illustrated includes mold halves 30, 32 that cooperate to define an interior surface 34 corresponding to a desired outer profile of a blown container. The mold cavity 16 can be moveable from an open position (FIG. 1) to a closed position (FIG. 2) such that a support ring 38 of the preform 12 is captured at an upper end of the mold cavity 16. The preform 12 can be formed of a polyester material, such as polyethylene terephthalate (PET), having a shape similar to a test-tube with a generally cylindrical cross section and a length typically approximately fifty percent (50%) that of the resultant container C height. In various embodiments, the preform 12 can be formed of various polyolefins, including polyethylene (e.g., high density polyethylene) and polypropylene. The support ring 38 can be used to carry or orient the preform 12 through and at various stages of manufacture. For example, the preform 12 can be carried by the support ring 38, the support ring 38 can be used to aid in positioning the preform 12 in the mold cavity 16, and an end consumer can use the support ring 38 to carry the plastic container C once manufactured.

In the example shown, the pressure source 20 can be in the form of a filling cylinder, manifold, or chamber 42 that generally includes a mechanical piston-like device 40 that can be configured in various embodiments as a piston, a pump (such as a hydraulic pump), or any other such similarly suitable device, where the piston-like device 40 is moveable within the filling cylinder, manifold, or chamber 42. The pressure source 20 has an inlet 46 for accepting the filling liquid 18 and an outlet 48 for delivering the filling liquid 18 to the blow nozzle 22. It is appreciated that the inlet 46 and the outlet 48 can have respective valves 52, 54 incorporated thereat. The piston-like device 40 can be moveable in a first direction (upward as viewed in the figures) to draw the filling liquid 18 from the inlet 46 into the filling cylinder, manifold, or chamber 42, and in a second direction (downward as viewed in the figures) to deliver the filling liquid 18 from the filling cylinder, manifold, or chamber 42 to the blow nozzle 22. The piston-like device 40 can be moveable by any suitable means, such as pneumatically, mechanically, or hydraulically, for example. The inlet 46 of the pressure source 20 can be connected, such as by tubing or piping, to a reservoir or container (not shown) that contains the filling liquid 18. It is understood that the pressure source 20 can be configured differently in various embodiments and that the system 10 can be configured with other means than the pressure source 20 shown in the figures to provide the filling liquid 18 to the blow nozzle 22.

The blow nozzle 22 generally defines an inlet 50 for accepting the filling liquid 18 from the pressure source 20 and an outlet 56 for delivering the filling liquid 18 into the preform 12. A valve (not shown) can be positioned within the blow nozzle 22 to further control delivery of the filling liquid 18 into the preform 12. It is appreciated that the outlet 56 can define a shape complementary to the preform 12 near the support ring 38 such that the blow nozzle 22 can easily engage or mate with the preform 12 during the forming/filling process. In one example, the blow nozzle 22 can define an opening 58 for slidably accepting the stretch rod 26 used to initiate mechanical stretching of the preform 12.

The second dampener 80 is configured as a pneumatic piston dampener, but other types of dampeners can be used, such as a weight-loaded piston dampener or a spring dampener. The second dampener 80 includes a piston 82 having a contact surface 84 coupled to the blow nozzle 22. The contact surface 84 can be fluidly coupled to the blow nozzle 22, where the contact surface 84 can also be contacted by the pressurized liquid 18 from the pressure source 20. The piston 82 seals a volume of fluid 86 (e.g., a gas), where the piston 82 is configured to move and compress the volume of fluid 86 (e.g., a gas) when a force is applied to the contact surface 84. In the embodiment shown, the contact surface 84 is coupled to the blow nozzle 22 opposite from where the blow nozzle 22 receives the pressurized liquid 18 from the pressure source 20.

The first dampener 90, likewise, is configured as a pneumatic piston dampener, but other types of dampeners can be used, such as a weight-loaded piston dampener or a spring dampener. The first dampener 90 includes a piston 92 having a contact surface 94 coupled to the mold 14. The contact surface 94 of the first dampener 90 can also be configured to be received by the mold 14, for example where the mold 14 halves 30, 32 engage or close about the contact surface 94, where the contact surface 94 can be impacted by the expanding preform 12. The piston 92 seals a volume of liquid 96 (e.g., a gas), where the piston 92 is configured to move and compress the volume of liquid 96 (e.g., a gas) when a force is applied to the contact surface 94. In the embodiment shown, the contact surface 94 is coupled to the mold 14 remote from where the mold 14 accepts the preform 12. The contact surface 94 can be coupled to the mold 14 opposite from where the mold 14 accepts the preform 12.

It is understood that the first dampener 90 and the second dampener 80 can be configured in other ways and as other dampening means. For example, the first 90 and second 80 dampeners can store pressure in the form of a compressed fluid (e.g., gas or liquid), a spring, or a weight, against which the respective contact surface 84, 94 pushes the respective piston 82, 92 to compress the fluid (e.g., gas or liquid), spring, or weight. The pressure of the volume of fluid (e.g., gas or liquid) 86, 96 within the dampener 80, 90 can be adjusted and tailored to offset forces experienced by the contact surface 84, 94. The volume of fluid (e.g., gas or liquid) 86, 96 can include various types of inert pressured gas, such as nitrogen, for example. Each dampener 80, 90 can include a body 88, 98 with a finely machined internal surface, where each piston 82, 92 is a floating steel or aluminum piston that can easily be accelerated due to its low weight. Each piston 82, 92 can float on guide rings which prevent metal-to-metal contact between the piston 82, 92 and the finely machined internal surface of the body 88, 98. Each dampener 80, 90 can therefore act as a shock absorber and vibration damper, where kinetic energy of moving parts can be converted into thermal energy; e.g., compression of the volume of gas 86, 96 generates heat. The dampener 80, 90 can minimize hard impacts or excessive vibration amplitudes. Single- and multistage actions can be used in the dampener 80, 90, which can provide adjustable linear, progressive, or degressive characteristic force curves.

In certain embodiments, the system 10 can be operated where the filling liquid 18 is introduced into the plastic container C during a thermal process, typically a hot-fill process. For hot-fill bottling applications, the plastic container C can be filled with a liquid or product at an elevated temperature between approximately 185°F to 205°F (approximately 85°C to 96°C) and sealed with a closure (not illustrated) before cooling. In various configurations, the filling liquid 18 can be heated within, en route to, and/or after leaving the pressure source 20. It is further possible to heat the filling liquid 18 relative to the pressure source 20 by circulating the filling liquid 18 within the filling cylinder, manifold, or chamber 42 through the inlet 46 whereby the filling liquid 18 can be heated to a preset temperature; e.g., using a heat source (not illustrated) upstream of the inlet 46. In addition, the plastic container C can be suitable for other high-temperature pasteurization or retort filling processes, as well as other thermal processes. In other embodiments, the filling liquid 18 can be introduced into the plastic container C under ambient or cold temperatures. Accordingly, by way of example, the plastic container C can be filled at ambient or cold temperatures such as between approximately 32 °F to 90 °F (approximately 0 °C to 32 °C), and more preferably at approximately 40 °F (approximately 4.4° C). Where the liquid commodity is filled at ambient or cold temperatures, the preform can be subjected to a sterilization process before introducing the filling liquid 18.

With reference again to the several figures, an exemplary method of simultaneously forming and filling the plastic container C will be described. In certain embodiments, the preform 12 can be sterilized by steam or other means prior to being introduced into the mold cavity 16. By subjecting the preform 12 to a sterilizing technique (such as steam), an aseptic preform and resulting container can be created. The container therefore need not be formed by a hot-filling process. Other examples of sterilizing the preform 12 include contact with various sterilizing mediums, such as liquid peroxide. The preform 12 can also be passed through an oven in excess of 212°F (100° C) and nearly immediately subjected to forming and filling and the resultant filled container can then be capped. In this way, the opportunity for an empty container to be exposed to the environment where it might become contaminated is minimized and the cost and complexity of aseptic filling can be reduced.

The preform 12 can be placed into the mold cavity 16; see FIGS. 1-2. For example, a machine (not illustrated) can transfer the preform 12, heated to a temperature between approximately 190°F to 250°F (approximately 88°C to 121°C), to the mold 14 where the preform 12 is enclosed within the mold cavity 16. As the preform 12 is placed into the mold cavity 16, the piston-like device 40 of the pressure source 20 can begin to draw the filling liquid 18 into the filling cylinder, manifold, or chamber 42 through the inlet 46. The mold halves 30, 32 of the mold cavity 16 can then close thereby capturing the preform 12; see FIG. 2. The blow nozzle 22 can form a seal at a finish of the preform 12. The mold cavity 16 can be heated to a temperature between approximately 250°F to 350°F (approximately 93°C to 177°C) in order to impart increased crystallinity levels within the resultant container C. In other embodiments, the mold cavity 16 can be provided at ambient or cold temperatures, between approximately 32°F to 90°F (approximately 0°C to 32°C). The filling liquid 18 can continue to be drawn into the filling cylinder, manifold, or chamber 42 by the piston-like device 40.

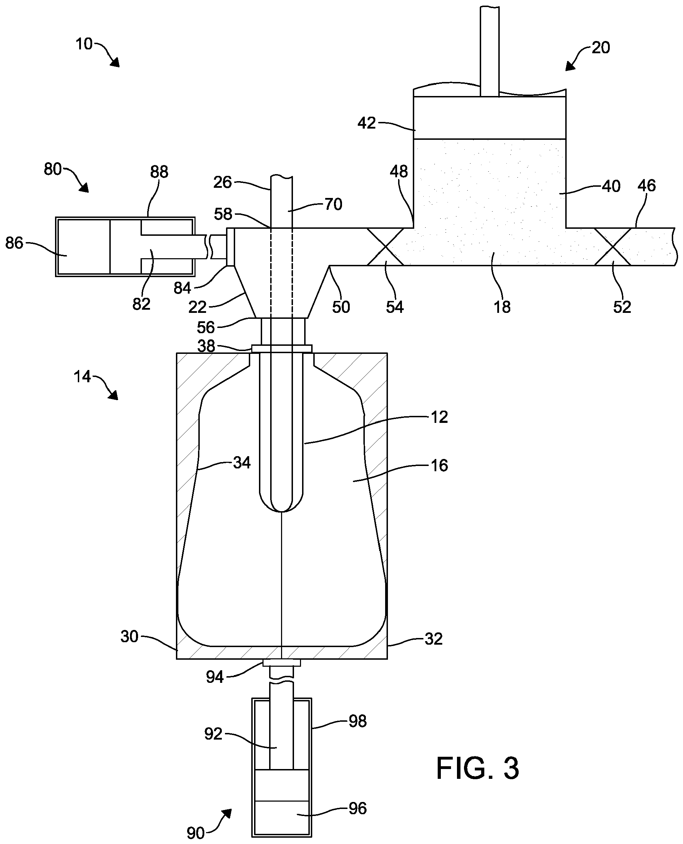

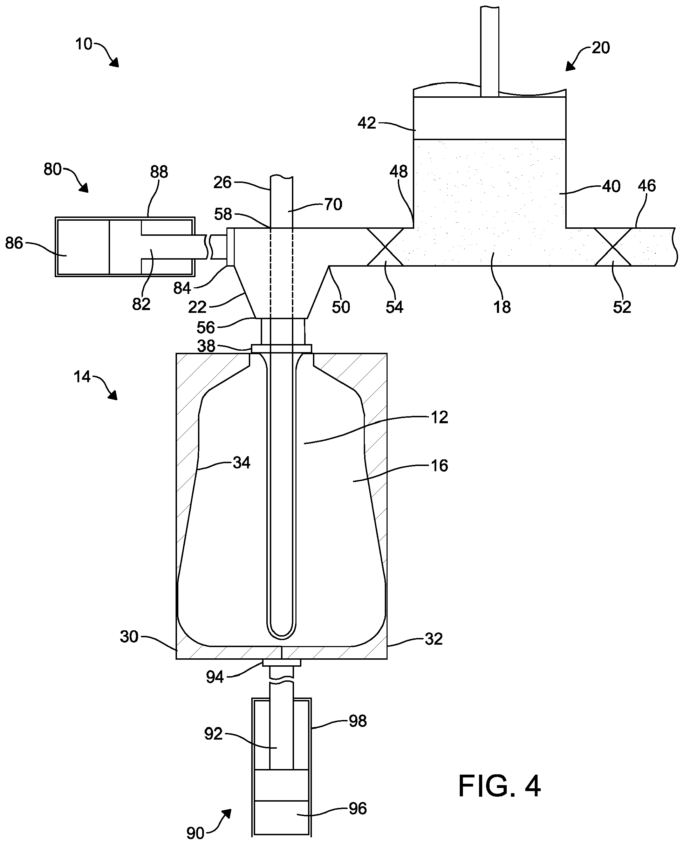

Turning now to FIG. 3, the stretch rod 26 can extend into the preform 12 to initiate mechanical stretching. At this point, the filling liquid 18 can continue to be drawn into the filling cylinder, manifold, or chamber 42. With reference to FIG. 4, the stretch rod 26 continues to stretch the preform 12 thereby thinning the sidewalls of the preform 12. The volume of the filling liquid 18 within the filling cylinder, manifold, or chamber 42 can increase until a desired charge or appropriate volume suitable to form and fill the resultant container C is reached. At this point, the valve 52 disposed at the inlet 46 of the pressure source 20 can be closed.

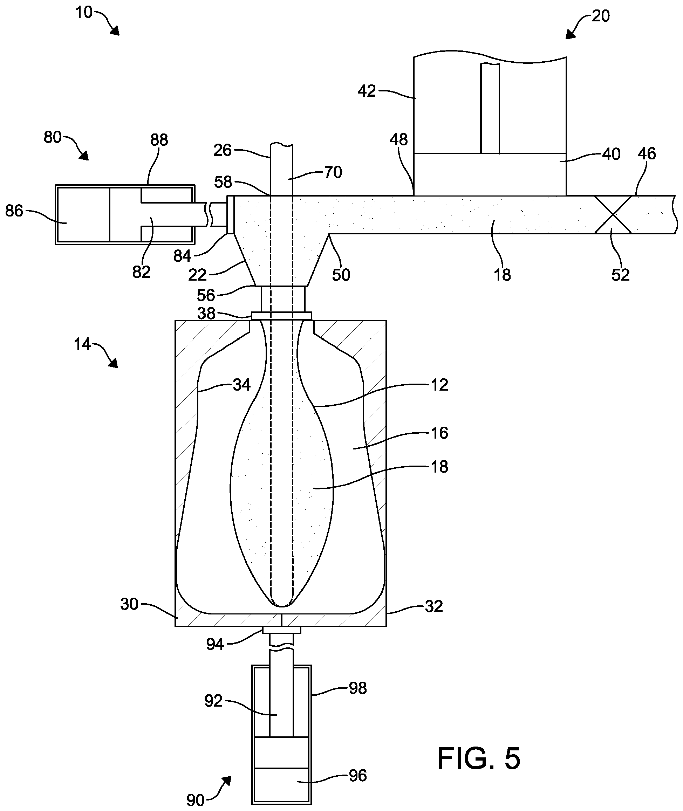

With specific reference to FIG. 5, the piston-like device 40 of the pressure source 20 can then begin to drive downward to initiate transfer of the filling liquid 18 from the filling cylinder, manifold, or chamber 42 to the blow nozzle 22 where the filling liquid 18 is directed into the preform 12. Again, the piston-like device 40 can be actuated by any suitable means such as pneumatic, mechanical and/or hydraulic pressure. In one example, the hydraulic pressure within the preform 12 can reach between approximately 100 psi (689 kPa) to 600 psi (4.1 MPa).

In the configuration of the system 10 shown in the figures, the pressure source 20 transfers the filling liquid 18 to the blow nozzle 22, where the filling liquid 18 is redirected to then enter into the preform 12. The filling liquid 18 provides a force against the opposite side of the blow nozzle 22 as the pressurized filling liquid 18 arrives from the pressure source 20. The second dampener 80 serves to dissipate water hammer induced shock and vibration resulting from the direction change of the filling liquid 18 encountered at the blow nozzle 22. The redirected pressurized filling liquid 18 can then hit the bottom of the stretched preform 12 as the stretched preform 12 begins to fill to form the container C; see FIG. 5. Deceleration of the filling liquid 18 against the bottom of the stretched preform 12 and mold 14 can provide a force against the mold 14 opposite from where the mold 14 accepts the preform 12. The contact surface 94 of the first dampener 90 can therefore dissipate water hammer induced shock and vibration experienced by the mold 14 or by the entire fill system 10.

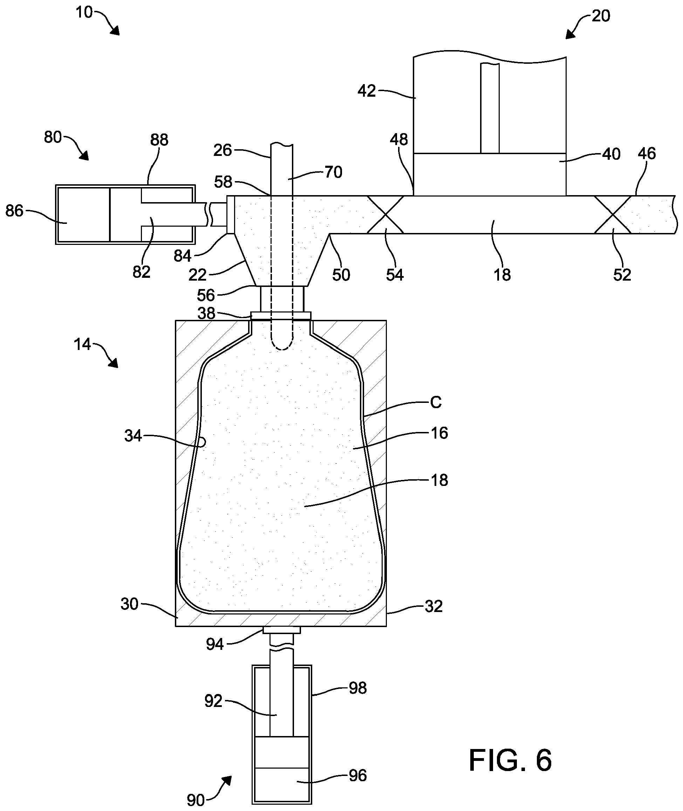

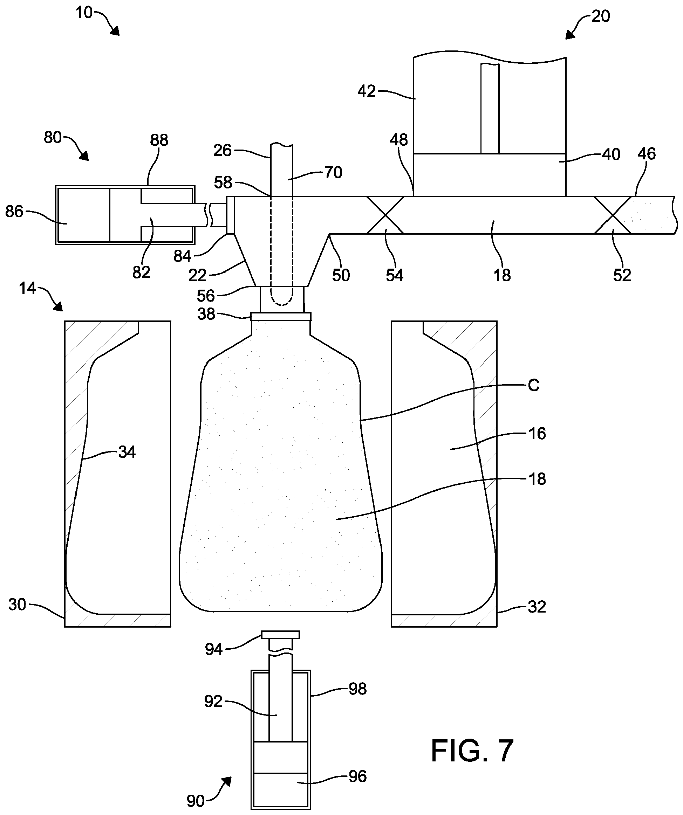

As the filling liquid 18 causes the preform 12 to expand toward the interior surface 34 of the mold cavity 16, residual air within the preform 12 can be vented through a passage 70 defined in the stretch rod 26; see FIG. 6. As shown in FIG. 7, the pressure source 20 has completed the dispensing of the charge of filling liquid 18 at the first pressure, where transfer of the appropriate volume of the filling liquid 18 to the newly formed plastic container C is complete. Concomitant with or thereafter, the stretch rod 26 can be withdrawn from the formed and filled container C within the mold cavity 16 while continuing to vent any residual air. In certain embodiments, the stretch rod 26 can be designed to displace a predetermined volume of the filling liquid 18 when it is withdrawn from the mold cavity 16 thereby allowing for a desired fill level of the filling liquid 18 within the resultant plastic container C. Generally, the desired fill level can correspond to a level at or near the level of the support ring 38 of the plastic container C.

Alternatively, the filling liquid 18 can be provided at a constant pressure or at different pressures during the molding cycle. For example, during axial stretching of the preform 12, the filling liquid 18 can be provided at a pressure which is less than the pressure applied when the preform 12 is blown into substantial conformity with the interior surface 34 of the mold cavity 16 defining the final configuration of the plastic container C. This lower pressure P1 can be ambient or greater than ambient but less than a subsequent high pressure P2. The preform 12 is axially stretched in the mold cavity 16 to a length approximating the final length of the resultant plastic container C. During or just after stretching the preform 12, the preform 12 is generally expanded radially outward under the low pressure P1. This low pressure P1 is preferably in the range of between approximately 100 psi (689 kPa) to 150 psi (1 MPa). Subsequently, the preform 12 is further expanded under the high pressure P2 such that the preform 12 contacts the interior surface 34 of the mold halves 30, 32 thereby forming the resultant plastic container C. Preferably, the high pressure P2 is in the range of approximately 500 psi (3.4 MPa) to 600 psi (4.1 MPa). As a result of the above method, the base and contact ring of the resultant plastic container C is fully circumferentially formed.

Optionally, more than one piston-like device can be employed during the formation of the resultant plastic container C. For example, a primary piston-like device can be used to generate the low pressure P1 to initially expand the preform 12 while a secondary piston-like device can be used to generate the subsequent high pressure P2 to further expand the preform 12 such that the preform 12 contacts the interior surface 34 of the mold halves 30, 32 thereby forming the resultant plastic container C. Various numbers of dampeners can be positioned throughout the system 10 to dampen various pressurized fluid movements throughout the system 10. Likewise, multiple dampeners can be used in place of single dampeners, where the multiple dampeners can operate in concert.

With reference to FIG. 8, the fill cycle is shown completed. The mold halves 30, 32 can separate and the blow nozzle 22 can be withdrawn. The resultant filled plastic container C can now be subjected to various post-forming steps, such as capping, labeling, and packing. At this point, the piston-like device 40 of the pressure source 20 can begin the next cycle by drawing more of the filling liquid 18 through the inlet 46 in preparation for the next fill/form cycle. While not specifically shown, it is appreciated that the system 10 can include a controller for communicating signals to one or more of the various components. In this way, the pressure source 20, the mold 14, the blow nozzle 22, the stretch rod 26, and various valves can operate according to one or more signals communicated by the controller. It is also contemplated that the controller can be utilized to adjust various parameters associated with these components according to a given application.

The following benefits and advantages can be realized by the present technology. Simultaneously forming and filling a container, where movement of a filling liquid is dampened at one or more points, can thereby minimize noise, vibration, and stress on system components and maximize system component lifespan. Durability is increased for forming and filling systems configured according to the present technology and component failure rates and replacement costs are reduced. The present technology further serves to optimize the forming and filling of containers in various ways. As forming and filling are integrated closer, but remain two separate processes (such as conventional methods of blow molding then subsequently filling the blow molded container), the overall efficiency of such a system is the product of the individual efficiencies of the two parts. In particular, compressed air is an inefficient means of transferring energy. Using the final product to provide hydraulic pressure, as per the present technology, to form the container can employ the equivalent of a positive displacement pump. As a result, it is a more efficient way to transfer energy. Other efficiencies can be driven largely by the number of transitions as parts move through the various systems and machines. Integrating the container forming and filling processes into a simultaneous event can minimize the number of transitions of components (e.g., containers and liquid to be placed therein) and therefore increase the overall process efficiency. The process described herein can eliminate intermediary work-in-process and therefore can avoid the cost associated with warehousing and/or container silos and/or forklifts and/or product damage, sterile storage, sterilizing equipment, etc. In addition, without work-in-process inventory, the overall working capital can be reduced.

Other advantages of the present technology including lowering some of the processing parameters while still achieving desired results. For example, the requirements for preform conditioning can be reduced because the crystallinity requirements can be lowered. In addition, mold conditioning requirements can be reduced which can reduce the amount of oils and/or other surface preparation materials used on the interior surface of the mold cavity. The concurrent blowing and filling process described herein can also facilitate the formation of a super-lightweight container. As noted above, in traditional hot-fill containers, the container can require a suitable wall thickness to accommodate vacuum pressures. By sterilizing the preform prior to introducing the liquid, the resultant wall thickness can be much thinner relative to a traditional hot-filled container. In a super-lightweight container, the liquid itself can give structural support to the container. The walls of a super-lightweight container can therefore be extremely flexible.

The combination of both the forming and filling processes into an integrated or unitary system can reduce handling parts and therefore lead to reduced capital cost per resultant plastic container C. In addition, the space required by a process that simultaneously forms and fills the resultant plastic container C can be significantly reduced over the space required when the processes are separate. This can also result in lower infrastructure cost. Integrating the two processes into a single step can reduce labor and additional costs (both capital and expense) associated with handling containers after they are produced and before they are filled. Integrating the blowing and filling processes into a single process eliminates the need to ship containers. The shipping of empty, formed containers is inherently inefficient and expensive. Shipping preforms, on the other hand, is much more efficient. As one example, a trailer load of empty 500 mL water bottles contains approximately 100,000 individual bottles. The same size trailer loaded with preforms required to make 500 mL water bottles can carry approximately 1,000,000 individual preforms, a 10:1 improvement.

In instances where products are hot filled, the package must be designed to accommodate the elevated temperature that it is exposed to during filling and the resultant internal vacuum it is exposed to as a result of the product cooling. A design that accommodates such conditions can require added container weight. Liquid/hydraulic blow molding offers the potential of eliminating the hot fill process and as a result, lowering the package weight.

The present technology further overcomes issues associated with liquid products that are susceptible to contamination. One predominant method for filling contaminant susceptible liquids is through hot filling, where the liquid is introduced to the container at a temperature that will pasteurize the liquid and can kill any microorganisms that are present. The resulting container can be sealed while the product is hot. However, one drawback to this technology is that the containers usually need to have a heavier weight design to sustain the elevated filling temperature and the vacuum that eventually develops in the container as the liquid product cools. The forming process can also be somewhat more complex and therefore more costly than non-heat set blow molding. The present technology offers the opportunity to reduce the cost and complexity of filling liquid products susceptible to contamination, including various liquid foods and beverages. By combining the forming and filling processes, there is an ability to heat the preform to over 212°F (100°C) for a sufficient period of time necessary to kill any biological contaminants, where the resultant container can be immediately sealed thereafter. The present technology can therefore provide an inexpensive and aseptic filling process with minimized opportunity for contamination.

The method described herein can be particularly useful for filling applications using liquids such as isotonic, juice, tea and other liquid commodities that are susceptible to biological contamination. In particular, by optionally sterilizing the preform as described herein, an aseptic preform and resulting container can be created without requiring the end liquid to be the sterilizing medium. These liquid commodities are typically filled in a controlled, sterile environment that can be established in various ways. One method for filling these types of liquids is by performing the process an aseptic filling environment; e.g., a clean room. All of the components of the product including the packaging are sterilized prior to filling. Once filled, the product can be sealed until it is consumed preventing any potential for the introduction of bacteria. The process is expensive to install and operate and there is always the risk of a bacterial contaminant breaking through the operational defenses and contaminating the product.

In other embodiments, the integrated blowing and filling processes described herein can be used to form containers including liquids such as carbonated beverages (i.e., soda, etc.). With respect to carbonated liquids, liquid carbon dioxide can be used in solution as part of, or in addition to, the liquid used for the simultaneous blowing and filling process. Liquid carbon dioxide prevents foaming that could otherwise occur when blowing with a liquid commodity having gaseous carbon dioxide. Carbon dioxide can exist in liquid form at a given pressure and temperature.

Many beverages, including juices, teas, beer, etc., are sensitive to oxygen and need to be protected when packaged. Many plastics do not have sufficient barrier characteristics to protect the contents from oxygen during the life of the packaged product. There are a number of techniques used to impart additional barrier properties to the container to slow down oxygen transmission and therefore protect the packaged contents. One of the most common techniques is to use an oxygen scavenger in the container wall. Such a scavenger can be molded directly into the preform. The relatively thick wall of the preform protects the scavenger from being consumed prior to blowing it into a container. However, once the container has been blown, the surface area of the wall increases and the thickness decreases. As such, the path that the oxygen has to travel to contact and react with the active scavenging material is shorter. Significant consumption of oxygen scavengers can begin as soon as the container is blown. If the container is formed and filled at the same time, then the scavenger is protecting the product through its entire useful life and not being consumed while the container sits empty waiting to be filled.

There are many other bottled products where this technology can be applicable. Consumable products such as dairy products, liquor, salad dressings, sauces, spreads, ketchups, syrups, edible oils, and others can be bottled utilizing such methods. Furthermore, the liquid used to form and fill a container can also include non-consumable liquid goods such as household cleaners, detergents, personal care items such as toothpaste, etc. Many of these products are currently found in blow molded PET containers but are also in extrusion molded plastic containers, glass bottles, and/or cans. The present technology can therefore optimize the economics of package manufacture and filling for such products.

While much of the description has focused on the production of PET containers, it is contemplated that other polyolefin materials (e.g., polyethylene, polypropylene, polyester, etc.) as well as a number of other plastics can be processed using the present technology.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments can be embodied in many different forms, and that neither should be construed to limit the scope of the disclosure. In some example embodiments, well-known processes, well-known device structures, and well-known technologies are not described in detail.

## Claims

1. A system (10) for simultaneously forming and filling a container (C) comprising:
a mold (14) having a cavity (16) defining an internal surface (34) and configured to accept a preform (12);
a pressure source (20) configured to provide a pressurized liquid (18);
a blow nozzle (22) configured to receive the pressurized liquid (18) from the pressure source (20) and transfer the pressurized liquid (18) into the preform (12) to urge the preform (12) to expand toward the internal surface (34) of the mold cavity (16) and form a resultant container (C),
where the liquid remains within the container (C) as an end product;
wherein the system further comprises a first dampening means (90) coupled to the mold (14);
wherein the first dampening means (90) includes a member selected from a group consisting of a weight-loaded piston dampener,
a spring dampener, and
a pneumatic piston dampener,
the system being **characterized in that**
the first dampening means (90) is be coupled to the blow nozzle (22) opposite from where the blow nozzle (22) receives the pressurized liquid (18) from the pressure source (20) and/or
coupled to the mold opposite from where the mold (30,32) accepts the preform (12).

2. The system (10) of Claim 1, wherein the pressure source (20) has an inlet (46), a chamber (42), an outlet (48), and a mechanically driven piston-like device (40) moveable within the chamber (42) in a first direction to draw a liquid into the chamber (42) through the inlet (46) and moveable in a second direction to urge the liquid out of the chamber (42) through the outlet (48) as the pressurized liquid (18).

3. The system (10) of Claim 2, wherein the piston-like device (40) is one of a piston, a pump, and an accumulator, the system further comprises a stretch rod (26) configured to mechanically stretch the preform (12) within the mold cavity (16) prior to the pressurized liquid (18) being transferred into the preform (12) by the blow nozzle (22), wherein the stretch rod (26) is vented.

4. The system (10) of Claim 1, wherein the first dampening means (90) is a pneumatic piston dampener including a piston (92) having a contact surface (94) coupled to the mold (14), the piston (92) sealing a volume of gas (96), the piston (92) configured to move and compress the volume of gas (96) when a force is applied to the contact surface (94).

5. The system (10) of Claim 4, wherein the volume of gas (96) is pressurized above atmospheric pressure.

6. The system (10) of Claim 4, wherein the contact surface (94) is coupled to the mold (14) remotely from where the mold (14) accepts the preform (12).

7. The system (10) of Claim 1, further comprising a second dampening means (80) coupled to the blow nozzle (22).

8. The system (10) of Claim 7, wherein the first dampening means (90) and the second dampening means (80) each comprise a pneumatic piston dampener including a piston (82, 92) having a contact surface (84, 94) coupled to the respective one of the blow nozzle (22) and the mold (14), the piston (82, 92) sealing a volume of gas (86, 96), the piston (82, 92) configured to move and compress the volume of gas (86,96) when a force is applied to the contact surface (84, 94).

9. The system (10) of Claim 7, wherein:
the first dampening means (90) comprises a first pneumatic piston dampener including a first piston (92) having a first contact surface (94) coupled to the mold (14) opposite from where the mold (14) accepts the preform (12), the first piston (92) sealing a first volume of gas (96), the first piston (92) configured to move and compress the first volume of gas (96) when a first force is applied to the first contact surface (94); and
the second dampening means (80) comprises a second pneumatic piston dampener including a second piston (82) having a second contact surface (84) coupled to the blow nozzle (22) opposite from where the blow nozzle (22) receives the pressurized liquid (18) from the pressure source (20), the second piston (82) sealing a second volume of gas (86), the second piston (82) configured to move and compress the second volume of gas (86) when a second force is applied to the second contact surface (84).

10. A method of simultaneously forming and filling a container (C) using a system in accordance with any of claims 1-9, the method comprising:
applying a pressure to a liquid using a pressure source (20) to provide a pressurized liquid (18), the pressure source (20) having an inlet (46), a chamber (42), an outlet (48), and a mechanically driven piston-like device (40) moveable within the chamber (42) in a first direction to draw the liquid into the chamber (42) through the inlet (46) and moveable in a second direction to urge the liquid out of the chamber (42) through the outlet (48) as the pressurized liquid (18);
dispensing the pressurized liquid (18) from the pressure source (20) to a blow nozzle (22), the blow nozzle (22_ configured to transfer the pressurized liquid (18) into a preform (12) within a mold (14), the mold (14) having a cavity (16) defining an internal surface (34) and configured to accept the preform (12);
expanding the preform (12) toward the internal surface (34) of the mold cavity (16) using the pressurized liquid (18) to form a resultant container (C), where the liquid remains within the container (C) as an end product; and dampening a first force using a first dampening means (90), the first force resulting from transferring the pressurized liquid (18) into the preform (12) within the mold (14).

11. The method of Claim 10, wherein prior to dispensing the pressurized liquid (18) from the pressure source (20) to the blow nozzle (22), using a stretch rod (26) to mechanically stretch the preform (12) within the mold cavity (16), and wherein expanding the preform (12) toward the internal surface (34) of the mold cavity (16) using the pressurized liquid (18) to form the resultant container (C) includes venting the preform (12) through the stretch rod (26).

12. The method of Claim 10, wherein the first dampening means (90) includes a pneumatic piston dampener, including a piston (92) having a contact surface (94), the piston sealing a volume of gas, the piston configured to move and compress the volume of gas when a first force is applied to the contact surface, the contact surface being coupled to the mold (14) opposite from where the mold (14) accepts the preform (12), the first force resulting from transferring the pressurized liquid into the preform within the mold.

13. The method of Claim 10, further comprising dampening a second force using a second dampening means (80), the second force resulting from dispensing the pressurized liquid (18) from the pressure source (20) to the blow nozzle (22).

14. The method of Claim 13, wherein:
the first dampening means (90) comprises a first pneumatic piston dampener including a first piston (92) having a first contact surface (94) coupled to the mold (14) opposite from where the mold (14) accepts the preform (12), the first piston (92) sealing a first volume of gas (96), the first piston (92) configured to move and compress the first volume of gas (96) when the first force is applied to the first contact surface(94), the first force resulting from transferring the pressurized liquid (18) into the preform (12) within the mold (14); and
the second dampening means (80) comprises a second pneumatic piston dampener including a second piston (82) having a second contact surface (84) coupled to the blow nozzle (22) opposite from where the blow nozzle (22) receives the pressurized liquid (18) from the pressure source (20) , the second piston (82) sealing a second volume of gas (86), the second piston (82) configured to move and compress the second volume of gas (86) when the second force is applied to the second contact surface (84), the second force resulting from dispensing the pressurized liquid (18) from the pressure source (20) to the blow nozzle (22).

## Patentansprüche

1. System (10) zum gleichzeitigen Bilden und Befüllen eines Behälters (C), das Folgendes umfasst:
eine Form (14), die einen Hohlraum (16) aufweist, der eine Innenfläche (34) definiert und dazu konfiguriert ist, eines Vorformling (12) aufzunehmen;
eine Druckquelle (20), die dazu konfiguriert ist, eine unter Druck stehende Flüssigkeit (18) bereitzustellen;
eine Blasdüse (22), die dazu konfiguriert ist, die unter Druck stehende Flüssigkeit (18) von der Druckquelle (20) empfangen und die unter Druck stehende Flüssigkeit (18) in den Vorformling (12) zu übertragen, um den Vorformling (12) dazu zu zwingen, sich zur Innenfläche (34) des Formhohlraums (16) hin auszudehnen und einen entstehenden Behälter (C) zu bilden,
wobei die Flüssigkeit als ein Endprodukt innerhalb des Behälters (C) verbleibt;
wobei das System ferner ein erstes Dämpfungsmittel (90) umfasst, das mit der Form (14) gekoppelt ist;
wobei das erste Dämpfungsmittel (90) ein Element enthält, das aus einer Gruppe ausgewählt ist, die aus
einem gewichtsbelasteten Kolbendämpfer,
einem Federdämpfer und
einem pneumatischen Kolbendämpfer besteht,
wobei das System **dadurch gekennzeichnet ist, dass**
das erste Dämpfungsmittel (90) gegenüber von dort, wo die Blasdüse (22) die unter Druck stehende Flüssigkeit (18) von der Druckquelle (20) empfängt, mit der Blasdüse (22) gekoppelt werden soll und/oder gegenüber von dort, wo die Form (30, 32) den Vorformling (12) aufnimmt, mit der Form gekoppelt werden soll.

2. System (10) nach Anspruch 1, wobei die Druckquelle (20) einen Einlass (46), eine Kammer (42), einen Auslass (48) und eine mechanisch angetriebene kolbenartige Vorrichtung (40) aufweist, die innerhalb der Kammer (42) in einer ersten Richtung beweglich ist, um eine Flüssigkeit durch den Einlass (46) in die Kammer (42) zu ziehen, und in einer zweiten Richtung beweglich ist, um die Flüssigkeit als die unter Druck stehende Flüssigkeit (18) durch den Auslass (48) aus der Kammer (42) heraus zu zwingen.

3. System (10) nach Anspruch 2, wobei die kolbenartige Vorrichtung (40) eine von einem Kolben, einer Pumpe und einem Akkumulator ist, wobei das System ferner eine Streckstange (26) umfasst, die dazu konfiguriert ist, den Vorformling (12) innerhalb des Formhohlraums (16) mechanisch zu strecken, bevor die unter Druck stehende Flüssigkeit (18) durch die Blasdüse (22) in den Vorformling (12) übertragen wird, wobei die Streckstange (26) entlüftet wird.

4. System (10) nach Anspruch 1, wobei das erste Dämpfungsmittel (90) ein pneumatischer Kolbendämpfer ist, der einen Kolben (92) enthält, der eine Kontaktfläche (94) aufweist, die mit der Form (14) gekoppelt ist, wobei der Kolben (92) ein Gasvolumen (96) abdichtet, wobei der Kolben (92) dazu konfiguriert ist, das Gasvolumen (96) zu bewegen und verdichten, wenn eine Kraft auf die Kontaktfläche (94) ausgeübt wird.

5. System (10) nach Anspruch 4, wobei das Gasvolumen (96) über den Atmosphärendruck hinaus unter Druck gesetzt wird.

6. System (10) nach Anspruch 4, wobei die Kontaktfläche (94) mit der Form (14) entfernt von dort, wo die Form (14) den Vorformling (12) aufnimmt, gekoppelt ist.

7. System (10) nach Anspruch 1, das ferner ein zweites Dämpfungsmittel (80) umfasst, das mit der Blasdüse (22) gekoppelt ist.

8. System (10) nach Anspruch 7, wobei das erste Dämpfungsmittel (90) und das zweite Dämpfungsmittel (80) jeweils einen pneumatischen Kolbendämpfer umfassen, der einen Kolben (82, 92) enthält, der eine Kontaktfläche (84, 94) aufweist, die mit dem jeweiligen von Blasdüse (22) und Form (14) gekoppelt ist, wobei der Kolben (82, 92) ein Gasvolumen (86, 96) abdichtet, wobei der Kolben (82, 92) dazu konfiguriert ist, das Gasvolumen (86, 96) zu bewegen und verdichten, wenn eine Kraft auf die Kontaktfläche (84, 94) ausgeübt wird.

9. System (10) nach Anspruch 7, wobei:
das erste Dämpfungsmittel (90) einen ersten pneumatischen Kolbendämpfer umfasst, der einen ersten Kolben (92) enthält, der eine erste Kontaktfläche (94) aufweist, die mit der Form (14) gegenüber von dort, wo die Form (14) den Vorformling (12) aufnimmt, gekoppelt ist, wobei der erste Kolben (92) ein erstes Gasvolumen (96) abdichtet, wobei der erste Kolben (92) dazu konfiguriert ist, das erste Gasvolumen (96) zu bewegen und verdichten, wenn eine erste Kraft auf die erste Kontaktfläche (94) ausgeübt wird; und
das zweite Dämpfungsmittel (80) einen zweiten pneumatischen Kolbendämpfer umfasst, der einen zweiten Kolben (82) enthält, der eine zweite Kontaktfläche (84) aufweist, die mit der Blasdüse (22) gegenüber von dort, wo die Blasdüse (22) die unter Druck stehende Flüssigkeit (18) von der Druckquelle (20) aufnimmt, gekoppelt ist, wobei der zweite Kolben (82) ein zweites Gasvolumen (86) abdichtet, wobei der zweite Kolben (82) dazu konfiguriert ist, das zweite Gasvolumen (86) zu bewegen und verdichten, wenn eine zweite Kraft auf die zweite Kontaktfläche (84) ausgeübt wird.

10. Verfahren zum gleichzeitigen Bilden und Befüllen eines Behälters (C) unter Verwendung eines Systems nach einem der Ansprüche 1-9, wobei das Verfahren Folgendes umfasst:
Ausüben eines Drucks auf eine Flüssigkeit unter Verwendung einer Druckquelle (20), um eine unter Druck stehende Flüssigkeit (18) bereitzustellen, wobei die Druckquelle (20) einen Einlass (46), eine Kammer (42), einen Auslass (48) und eine mechanisch angetriebene kolbenartige Vorrichtung (40) aufweist, die innerhalb der Kammer (42) in einer ersten Richtung beweglich ist, um die Flüssigkeit durch den Einlass (46) in die Kammer (42) zu ziehen, und in einer zweiten Richtung beweglich ist, um die Flüssigkeit als die unter Druck stehende Flüssigkeit (18) durch den Auslass (48) aus der Kammer (42) heraus zu zwingen;
Abgeben der unter Druck stehenden Flüssigkeit (18) von der Druckquelle (20) zu einer Blasdüse (22), wobei die Blasdüse (22) dazu konfiguriert ist, die unter Druck stehende Flüssigkeit (18) in einen Vorformling (12) innerhalb einer Form (14) zu übertragen, wobei die Form (14) einen Hohlraum (16) aufweist, der eine Innenfläche (34) definiert und dazu konfiguriert ist, den Vorformling (12) aufzunehmen;
Ausdehnen des Vorformlings (12) in Richtung der Innenfläche (34) des Formhohlraums (16) unter Verwendung der unter Druck stehenden Flüssigkeit (18), um einen erstehenden Behälter (C) zu bilden, wobei die Flüssigkeit als ein Endprodukt im Behälter (C) verbleibt; und
Dämpfen einer ersten Kraft unter Verwendung eines ersten Dämpfungsmittels (90), wobei die erste Kraft durch das Übertragen der unter Druck stehenden Flüssigkeit (18) in den Vorformling (12) innerhalb der Form (14) entsteht.

11. Verfahren nach Anspruch 10, wobei vor dem Abgeben der unter Druck stehenden Flüssigkeit (18) von der Druckquelle (20) zur Blasdüse (22) eine Streckstange (26) verwendet wird, um den Vorformling (12) innerhalb des Formhohlraums (16) mechanisch zu strecken, und wobei das Ausdehnen des Vorformlings (12) in Richtung der Innenfläche (34) des Formhohlraums (16) unter Verwendung der unter Druck stehenden Flüssigkeit (18), um den entstehenden Behälter (C) zu bilden, das Entlüften des Vorformlings (12) durch die Streckstange (26) enthält.

12. Verfahren nach Anspruch 10, wobei das erste Dämpfungsmittel (90) einen pneumatischen Kolbendämpfer enthält, der einen Kolben (92) enthält, der eine Kontaktfläche (94) aufweist, wobei der Kolben ein Gasvolumen abdichtet, wobei der Kolben dazu konfiguriert ist, das Gasvolumen zu bewegt und verdichten, wenn eine erste Kraft auf die Kontaktfläche ausgeübt wird, wobei die Kontaktfläche gegenüber von dort, wo die Form (14) den Vorformling (12) aufnimmt, mit der Form (14) gekoppelt ist, wobei die erste Kraft durch das Übertragen der unter Druck stehenden Flüssigkeit in den Vorformling innerhalb der Form entsteht.

13. Verfahren nach Anspruch 10, das ferner das Dämpfen einer zweiten Kraft unter Verwendung eines zweiten Dämpfungsmittels (80) umfasst, wobei die zweite Kraft durch das Abgeben der unter Druck stehenden Flüssigkeit (18) von der Druckquelle (20) zur Blasdüse (22) entsteht.

14. Verfahren nach Anspruch 13, wobei:
das erste Dämpfungsmittel (90) einen ersten pneumatischen Kolbendämpfer umfasst, der einen ersten Kolben (92) enthält, der eine erste Kontaktfläche (94) aufweist, die gegenüber von dort, wo die Form (14) den Vorformling (12) aufnimmt, mit der Form (14) gekoppelt ist, wobei der erste Kolben (92) ein erstes Gasvolumen (96) abdichtet, wobei der erste Kolben (92) dazu konfiguriert ist, das erste Gasvolumen (96) zu bewegen und verdichten, wenn die erste Kraft auf die erste Kontaktfläche (94) ausgeübt wird, wobei die erste Kraft durch das Übertragen der unter Druck stehenden Flüssigkeit (18) in den Vorformling (12) innerhalb der Form (14) entsteht; und
das zweite Dämpfungsmittel (80) einen zweiten pneumatischen Kolbendämpfer umfasst, der einen zweiten Kolben (82) enthält, der eine zweite Kontaktfläche (84) aufweist, die gegenüber von dort, wo die Blasdüse (22) die unter Druck stehende Flüssigkeit (18) von der Druckquelle (20) aufnimmt, mit der Blasdüse (22) gekoppelt ist, wobei der zweite Kolben (82) ein zweites Gasvolumen (86) abdichtet, wobei der zweite Kolben (82) dazu konfiguriert ist, das zweite Gasvolumen (86) zu bewegen und verdichten, wenn die zweite Kraft auf die zweite Kontaktfläche (84) ausgeübt wird, wobei die zweite Kraft durch das Abgeben der unter Druck stehenden Flüssigkeit (18) von der Druckquelle (20) zur Blasdüse (22) entsteht.

## Revendications

1. Système (10) pour former et remplir simultanément un récipient (C) comprenant :
un moule (14) ayant une cavité (16) définissant une surface interne (34) et configuré pour accepter une préforme (12) ;
une source de pression (20) configurée pour fournir un liquide sous pression (18) ; une buse de soufflage (22) configurée pour recevoir le liquide sous pression (18) à partir de la source de pression (20) et transférer le liquide sous pression (18) dans la préforme (12) pour pousser la préforme (12) pour qu'elle se dilate vers la surface interne (34) de la cavité (16) de moule et former un récipient (C) résultant,
où le liquide reste dans le récipient (C) en tant qu'un produit final ;
dans lequel le système comprend en outre un premier moyen d'amortissement (90) accouplé au moule (14) ;
dans lequel le premier moyen d'amortissement (90) comporte un élément sélectionné dans un groupe consistant en
un amortisseur à piston à poids,
un amortisseur à ressort, et
un amortisseur à piston pneumatique,
le système étant **caractérisé en ce que**
le premier moyen d'amortissement (90) doit être accouplé à la buse de soufflage (22) à l'opposé d'où la buse de soufflage (22) reçoit le liquide sous pression (18) à partir de la source de pression (20) et/ou accouplé au moule à l'opposé d'où le moule (30, 32) accepte la préforme (12).

2. Système (10) selon la revendication 1, dans lequel la source de pression (20) a une entrée (46), une chambre (42), une sortie (48) et un dispositif du type piston (40) entraîné mécaniquement, mobile dans la chambre (42) dans une première direction pour aspirer un liquide dans la chambre (42) à travers l'entrée (46) et mobile dans une seconde direction pour pousser le liquide hors de la chambre (42) à travers la sortie (48) en tant que le liquide sous pression (18).

3. Système (10) selon la revendication 2, dans lequel le dispositif du type piston (40) est un parmi un piston, une pompe et un accumulateur, le système comprend en outre une tige d'étirage (26) configurée pour étirer mécaniquement la préforme (12) dans la cavité (16) de moule avant que le liquide sous pression (18) ne soit transféré dans la préforme (12) par la buse de soufflage (22), dans lequel la tige d'étirage (26) est éventée.

4. Système (10) selon la revendication 1, dans lequel le premier moyen d'amortissement (90) est un amortisseur à piston pneumatique comprenant un piston (92) ayant une surface de contact (94) accouplée au moule (14), le piston (92) enfermant un volume de gaz (96), le piston (92) étant configuré pour se déplacer et comprimer le volume de gaz (96) lorsqu'une force est appliquée sur la surface de contact (94).

5. Système (10) selon la revendication 4, dans lequel le volume de gaz (96) est mis sous pression au-dessus de la pression atmosphérique.

6. Système (10) selon la revendication 4, dans lequel la surface de contact (94) est accouplée au moule (14) à distance d'où le moule (14) accepte la préforme (12).

7. Système (10) selon la revendication 1, comprenant en outre un second moyen d'amortissement (80) accouplé à la buse de soufflage (22).

8. Système (10) selon la revendication 7, dans lequel le premier moyen d'amortissement (90) et le second moyen d'amortissement (80) comprennent chacun un amortisseur à piston pneumatique comprenant un piston (82, 92) ayant une surface de contact (84, 94) accouplée au respectif parmi la buse de soufflage (22) et le moule (14), le piston (82, 92) enfermant un volume de gaz (86, 96), le piston (82, 92) étant configuré pour se déplacer et comprimer le volume de gaz (86, 96) lorsqu'une force est appliquée sur la surface de contact (84, 94).

9. Système (10) selon la revendication 7, dans lequel :
le premier moyen d'amortissement (90) comprend un premier amortisseur à piston pneumatique comprenant un premier piston (92) ayant une première surface de contact (94) accouplée au moule (14) à l'opposé d'où le moule (14) accepte la préforme (12), le premier piston (92) enfermant un premier volume de gaz (96), le premier piston (92) étant configuré pour se déplacer et comprimer le premier volume de gaz (96) lorsqu'une première force est appliquée sur la première surface de contact (94) ; et
le second moyen d'amortissement (80) comprend un second amortisseur à piston pneumatique comportant un second piston (82) ayant une seconde surface de contact (84) accouplée à la buse de soufflage (22) à l'opposé d'où la buse de soufflage (22) reçoit le liquide sous pression (18) à partir de la source de pression (20), le second piston (82) enfermant un second volume de gaz (86), le second piston (82) étant configuré pour se déplacer et comprimer le second volume de gaz (86) lorsqu'une seconde force est appliquée sur la seconde surface de contact (84).

10. Procédé consistant à former et remplir simultanément un récipient (C) en utilisant un système selon l'une quelconque des revendications 1 à 9, le procédé comprenant :
une application d'une pression sur un liquide en utilisant une source de pression (20) pour fournir un liquide sous pression (18), la source de pression (20) ayant une entrée (46), une chambre (42), une sortie (48) et un dispositif du type piston (40) entraîné mécaniquement, mobile dans la chambre (42) dans une première direction pour aspirer le liquide dans la chambre (42) à travers l'entrée (46) et mobile dans une seconde direction pour pousser le liquide hors de la chambre (42) à travers la sortie (48) en tant que liquide sous pression (18) ;
une distribution du liquide sous pression (18) à partir de la source de pression (20) jusqu'à une buse de soufflage (22), la buse de soufflage (22) étant configurée pour transférer le liquide sous pression (18) dans une préforme (12) dans un moule (14), le moule (14) ayant une cavité (16) définissant une surface interne (34) et étant configuré pour accepter la préforme (12) ;
une dilatation de la préforme (12) vers la surface interne (34) de la cavité (16) de moule en utilisant le liquide sous pression (18) pour former un récipient (C) résultant, où le liquide reste dans le récipient (C) en tant que produit final ; et
un amortissement d'une première force en utilisant un premier moyen d'amortissement (90), la première force résultant du transfert du liquide sous pression (18) dans la préforme (12) dans le moule (14).

11. Procédé selon la revendication 10, dans lequel avant de distribuer le liquide sous pression (18) à partir de la source de pression (20) jusqu'à la buse de soufflage (22), une utilisation d'une tige d'étirage (26) pour étirer mécaniquement la préforme (12) dans la cavité (16) de moule, et dans lequel la dilatation de la préforme (12) vers la surface interne (34) de la cavité (16) de moule en utilisant le liquide sous pression (18) pour former le récipient (C) résultant comporte l'exposition à l'air de la préforme (12) à travers la tige d'étirage (26).

12. Procédé selon la revendication 10, dans lequel le premier moyen d'amortissement (90) comprend un amortisseur à piston pneumatique, comportant un piston (92) ayant une surface de contact (94), le piston enfermant un volume de gaz, le piston étant configuré pour se déplacer et comprimer le volume de gaz lorsqu'une première force est appliquée sur la surface de contact, la surface de contact étant accouplée au moule (14) à l'opposé d'où le moule (14) accepte la préforme (12), la première force résultant du transfert du liquide sous pression dans la préforme dans le moule.

13. Procédé selon la revendication 10, comprenant en outre l'amortissement d'une seconde force en utilisant un second moyen d'amortissement (80), la seconde force résultant de la distribution du liquide sous pression (18) à partir de la source de pression (20) jusqu'à la buse de soufflage (22).

14. Procédé selon la revendication 13, dans lequel :
le premier moyen d'amortissement (90) comprend un premier amortisseur à piston pneumatique comportant un premier piston (92) ayant une première surface de contact (94) accouplée au moule (14) à l'opposé d'où le moule (14) accepte la préforme (12), le premier piston (92) enfermant un premier volume de gaz (96), le premier piston (92) étant configuré pour se déplacer et comprimer le premier volume de gaz (96) lorsque la première force est appliquée sur la première surface de contact (94), la première force résultant du transfert du liquide sous pression (18) dans la préforme (12) dans le moule (14) ; et
le second moyen d'amortissement (80) comprend un second amortisseur à piston pneumatique comportant un second piston (82) ayant une seconde surface de contact (84) accouplée à la buse de soufflage (22) à l'opposé d'où la buse de soufflage (22) reçoit le liquide sous pression (18) à partir de la source de pression (20), le second piston (82) enfermant un second volume de gaz (86), le second piston (82) étant configuré pour se déplacer et comprimer le second volume de gaz (86) lorsque la seconde force est appliquée sur la seconde surface de contact (84), la seconde force résultant de la distribution du liquide sous pression (18) à partir de la source de pression (20) jusqu'à la buse de soufflage (22).
